(19) Europäisches Patentamt
European Patent Office
Office européen des brevets

(11) Veröffentlichungsnummer: **0 062 211**
**B1**

(12) # EUROPÄISCHE PATENTSCHRIFT

(45) Veröffentlichungstag der Patentschrift: **30.04.86**

(21) Anmeldenummer: **82102336.3**

(22) Anmeldetag: **22.03.82**

(51) Int. Cl.[4]: **C 08 L 101/00**, C 08 L 1/10, C 08 L 69/00, C 08 L 27/06, C 08 L 33/20, C 08 J 5/00, C 08 L 49/00

(54) **Kletten- oder faserförmige, dotierte Polyacetylenteilchen enthaltende Flächengebilde und Fasern und Verfahren zu ihrer Herstellung.**

(30) Priorität: **02.04.81 DE 3113329**

(43) Veröffentlichungstag der Anmeldung: **13.10.82 Patentblatt 82/41**

(45) Bekanntmachung des Hinweises auf die Patenterteilung: **30.04.86 Patentblatt 86/18**

(84) Benannte Vertragsstaaten: **CH DE FR GB IT LI NL**

(56) Entgegenhaltungen:
**EP - A - 0 045 905**
**EP - A - 0 045 908**
**GB - A - 2 072 197**

(73) Patentinhaber: **BAYER AG, Konzernverwaltung RP Patentabteilung, D-5090 Leverkusen 1 Bayerwerk (DE)**

(72) Erfinder: **Hocker, Jürgen, Dr., Eichenweg 6, D-5060 Bergisch-Gladbach 2 (DE)**
Erfinder: **Merten, Rudolf, Dr., Berta-von-Suttner-Strasse 55, D-5090 Leverkusen 1 (DE)**
Erfinder: **Willenberg, Bernd, Dr., Feldstrasse 94, D-5060 Bergisch-Gladbach 2 (DE)**

**EP 0 062 211 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Es ist bekannt, Polyacetylene durch Polymerisation von Acetylen mit Hilfe von metallorganischen Mischkatalysatoren herzustellen (J. Polym. Sci. Bd. 12, Seiten 11-20). Es ist ferner bekannt, kristalline Folien aus Polyacetylen zu dotieren durch Behandeln mit gasförmigen Elektronenakzeptordotiermitteln, so daß ihre elektrische Leitfähigkeit verbessert wird (US-PS 4.222.903).

Gegenstand der Erfindung ist ein Verfahren zur Herstellung von Flächengebilden, wie Überzügen, Imprägnierungen, einschließlich Fasern aus dotierte kletten- bzw. faserförmige Polyacetylenteilchen enthaltenden Kunststofflösungen, das dadurch gekennzeichnet ist, daß man das Lösungsmittel nach Formgebung unter geeigneten Bedingungen entfernt. Ebenfalls Gegenstand der Erfindung sind Flächengebilde, einschließlich Fasern aus 0,01-99 Gew.-%, vorzugsweise 0,1 bis 20 Gew.-%, insbesondere 0,5 bis 5 Gew.-% dotierte Polyacetylenteilchen enthaltenden Kunststoffen, gegebenenfalls in Kombination mit anderen Füllstoffen.

Ausgangspunkt für die vorliegende Erfindung ist eine Suspension von Polyacetylenteilchen in Form von Faserknäuelchen oder "Kletten". Die Struktur der Teilchen wird durch die Figur 1 erläutert (Vergrößerung 1:105). Sie ist erfindungswesentlich. Diese Suspension erhält man, indem man gasförmiges Acetylen bei Temperaturen von $-100°C$ bis $+80°C$ in eine Lösung eines metallorganischen Mischkatalysators in einem organischen Lösungsmittel unter Agitation einleitet, bis sich pro Liter Lösung maximal 30 g Polyacetylen gebildet haben. Das Lösungsmittel für den Katalysator und gleichzeitig Suspendiermittel für die Polyacetylenteilchen ist in der Regel ein aliphatischer oder aromatischer Kohlenwasserstoff, der auch halogeniert sein kann, beispielsweise Benzol, Toluol, Chlorbenzol, Tetralin, Methylenchlorid oder Chloroform.

Der metallorganische Mischkatalysator oder Ziegler-Katalysator ist ein Umsetzungsprodukt aus, einerseits, Verbindungen von Schwermetallen der Gruppen 4b, 5b, 6b, 7b und 8 des Periodensystems der Elemente (Handbook of Chemistry and Physics, 47. Auflage (1966), S. B 3 - Chem. Rubber Company, Cleveland, Ohio/USA), und, andererseits, Aluminiumalkylen oder Aluminiumalkylhalogeniden. Ziegler-Katalysatoren sind genau bekannt. Bevorzugt verwendet man für die Herstellung von Polyacetylenteilchen Katalysatoren aus 0,05 bis 0,2 Mol Vanadium-Verbindung der Formel

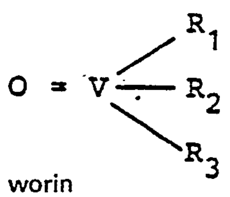

worin

$R_1$ Halogen (Chlor),

$R_2$, $R_3$ unabhängig Halogen (Chlor), $OR_5$ ($R_5$ = $C_1$-$C_{20}$-Alkyl, geradkettig, cyclisch oder verzweigt), bedeuten,

mit 0,1 bis 20, bevorzugt 1 bis 10 Mol, Aluminiumalkylverbindungen der Formeln:

$Al(R_4)_3$, $AlX(R_4)_2$, $AlX_2(R_4)$, $Al_2X_3(R_4)_3$, worin

$R_4$ $C_1$-$C_{12}$-Alkyl, bevorzugt Methyl, Ethyl, Propyl, Isopropyl, Isobutyl, Octyl,

X Halogen

bedeuten.

Besonders geeignete Vanadiumverbindungen sind:

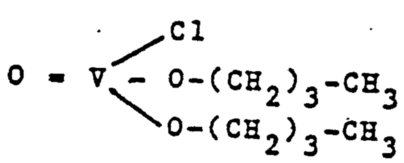

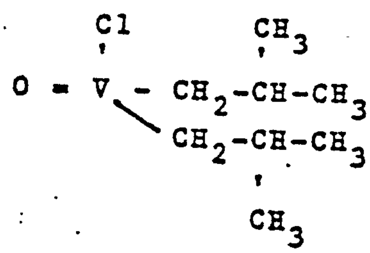

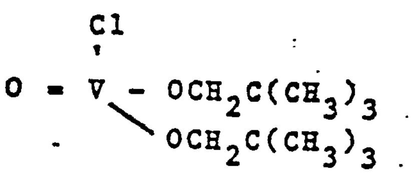

Besonders geeignete Aluminiumalkyle sind: Triethylaluminium, Tripropylaluminium, Triisopropylaluminium, Tributylaluminium, Triisobutylaluminium, Trioctylaluminium.

Geeignete Lösungsmittel sind insbesondere Kohlenwasserstoffe wie Benzol, Toluol, Hexan, Cyclohexan, Tetralin, Dekalin, halogenierte Kohlenwasserstoffe wie Methylenchlorid, Chloroform, Chlorbenzol.

Die Katalysatoren werden durch Umsetzung der Vanadiumverbindung und der Aluminiumverbindung im Lösungsmittel bei Temperaturen von $-100$ bis $+30°C$ in an sich bekannter Weise hergestellt. Zur nachfolgenden Polymerisation benutzt man im allgemeinen Lösungen, die 5 bis 100 mMol Aluminium pro Liter Lösungsmittel enthalten. In diese Lösung wird Acetylen unter anaeroben Bedingungen eingeleitet, bei Temperaturen von $-100$

bis $+80°C$, bevorzugt $-80$ bis $+20°C$. Es entsteht dabei eine Suspension von Polyacetylen. Die suspendierten Teilchen sehen unter dem Mikroskop wie kleine Kletten aus, mit einem Durchmesser von ca. 0,01 bis 1,0 mm.

Die so erhaltenen Suspensionen von Polyacetylenteilchen enthalten im allgemeinen 0,01 bis 30 g pro Liter, bevorzugt 0,1 bis 10 g Polyacetylenteilchen pro Liter. Es kann vorteilhaft sein, diese Suspension vor ihrer Weiterbehandlung noch einmal mechanisch zu homogenisieren, z.B. mit einem Ultraturrax, dabei soll die Faserstruktur der Teilchen erhalten bleiben.

Vor Dotierung muß in diesen Suspensionen zunächst der Ziegler-Katalysator desaktiviert bzw. entfernt werden; dies kann man in üblicher Weise durch zufügen von Alkoholen wie Methanol, Ethanol, oder Gemischen davon oder durch Ausschütteln mit wäßrigen Säuren, z.B. Salzsäure erreichen. Man kann aber auch das Suspendiermittel, in dem der Katalysator gelöst ist, austauschen. Dies wird man tun, wenn es darauf ankommt, die Katalysatorbestandteile zu entfernen oder wenn das vorhandene Suspendiermittel für die weitere Verarbeitung ungeeignet ist.

Zur Dotierung setzt man das Dotierungsmittel in Substanz oder in Lösung der Suspension zu. Man kann bei Temperaturen von $-78$ bis $+100°C$ arbeiten, bevorzugt sind 10-30°C. Die Menge Dotiermittel ist im allgemeinen $1 \times 10^{-5}$ bis $4 \times 10^{-1}$ Mol pro Grammäquivalent an -CH-Einheiten (= 13 g Polyacetylen), bevorzugt $1 \times 10^{-3}$ bis $2 \times 10^{-1}$ Mol.

Überschußdotiermittel kann in der Suspension bleiben, z.B. durch erneuten Austausch des Suspendiermittels entfernt oder durch geeignete Maßnahmen zerstört werden.

Beispiele sind:

Chlor, Brom, Iod, JCl, JBr, Halogenverbindungen wie $AsF_5$, $SbF_5$, $SbCl_5$, $AsCl_5$, $PF_5$, $POF_3$, Oxide wie NO, $NO_2$, konz. $H_2SO_4$, $H_2O_2$, $CrO_3$ oder auch Sauerstoff, Ozon, bzw. Peroxyverbindungen.

Zur n-Dotierung verwendet man meist starke Reduktionsmittel.

Beispiele sind:

Alkalimetalle oder deren Naphthalide, wie Natrium, Kalium, Natriumnaphthalid oder auch Elektronendonatoren wie Amine.

Man kann auch in der Suspension Kunststoffe auflösen. Da man das Suspendiermittel durch Austausch nahezu beliebig wählen kann (Polyacetylen ist in allen organischen Solventien unlöslich), kann man auch fast jeden Kunststoff lösen.

Beispiele sind:

Polycarbonate, Celluloseester Polyamide, Styrol-Homound -Copolymerisate, Polyvinylhalogenide (Polyvinylchlorid), Polyacrylnitril, Polyester, Polyurethane. Es können auch Kunststoffvorstufen, beispielsweise Epoxidharze gelöst werden, oder Polyisocyanat/Polyol- (oder Polyamin-)-Mischungen direkt benutzt werden (Polyacetylene können im Polyol suspendiert werden). Die Polymer-Lösungen können auch übliche Zusätze wie weitere Füllstoffe, Stabilisatoren, Verlaufmittel, Pigmente, Weichmacher, Netzmittel, Antioxidantien enthalten. Aus diesen kletten- bzw. faserförmige Polyacetylenteilchen enthaltenden Kunststofflösungen - sie enthalten im allgemeinen etwa 0,01 bis 99 Gew.-% Polyacetylen, vorzugsweise 0,1 bis 20 Gew.-%, insbesondere 0,5 bis 5 Gew.-%, bezogen auf Kunststoff - kann man in üblicher Weise durch Entfernen des Lösungsmittels Flächengebilde wie Folien, Überzüge und Imprägnierungen, sowie Fasern herstellen. In manchen Fällen kann es vorteilhaft sein, andere, die Leitfähigkeit erhöhende Stoffe wie Ruß, Graphit, polymere oder niedermolekulare organische Leiter oder Metalle in Form von Pulvern, Fasern oder Flakes zuzufügen.

Die erfindungsgemäßen, kletten- bzw. faserförmiges dotiertes Polyacatylen enthaltenden Produkte haben sehr gute mechanische Eigenschaften. Die elektrische Leitfähigkeit läßt sich in weiten Grenzen variieren. Besonders geeignet ist ein Zusatz von dotiertem Polyacetylen zur Erzielung antistatischer Eigenschaften von Kunststoffen.

Man kann z.B. durch Versprühen einer einen Kunststoff (z.B. Polycarbonat oder Polybutadien) enthaltenden Suspension der dotierten Polyacetylenteilchen in einem organischen Lösungsmittel zusammenhängende Überzüge auf verschiedenen Substraten erzeugen. Die Überzüge haben Dicken ab 0,1 µm, die beliebig variiert werden können. Sie haften insbesondere fest auf Papier, Kunststoffen, Glas und Metallen und sind z.B. für gedruckte Schaltungen verwendbar.

## AUSFÜHRUNGSBEISPIELE

### Beispiel 1

**Herstellung des Katalysators, Polymerisation und Aufarbeitung**

In eine 2-1-Becherglasrührapparatur werden 1,3 l Toluol vorgelegt und unter einem Stickstoffstrom 300 ml Toluol abdestilliert. Unter Trockeneiskühlung werden bei $-78°C$ 4 ml (2 mMol) Bis-(2,2-dimethylpropoxy)-vanadiumoxychlorid 0,5 molar in Toluol und 20 ml (20 mMol) Aluminiumtriisobutyl 1 molar in Toluol zugesetzt. Die Apparatur steht dabei ständig unter einem Stickstoffstrom. Mit einer Geschwindigkeit von 10 l pro Stunde wird unter Rühren 1 Stunde reines Acetylen durchgeleitet. Das polyacetylen fällt als Niederschlag aus. Es handelt sich um rosa bis violette klettenförmige Gebilde (Fig. 1) mit einem Durchmesser von ca. 0,05 bis 0,5 mm. Die so erhaltene Suspension enthält 4 g polyacetylen pro Liter. Die Reaktion wird mit 0,5 g 4-Methyl-2,6-di-tert.-butylphenol (Ionol®) in 400 ml absolutem Toluol abgestoppt und das Reaktionsgemisch mit Stickstoff ausgeblasen, wobei die Temperatur auf 20°C ansteigt.

**Beispiel 2**

In eine 2-1-Becherglasrührapparatur werden 1000 ml absolutes Methylenchlorid vorgelegt.

Man kühlt auf -78°C ab, setzt 4,2 ml (12,5 mMol) Titantetrabutylat (100 %ig) und 50 ml (50 mMol) Aluminiumtriisobutyl 1 molar in Methylenchlorid zu.

Unter Rühren werden innerhalb einer Stunde 10 g Acetylen bei -78°C durch die Katalysatorlösung geleitet, wobei dunkles polyacetylen ausfällt. Die Reaktion wird mit einer Lösung aus 0,5 g 4-Methyl-2,6-di-tert.-butylphenol (Ionol) in 5 ml Methanol abgestoppt und die Temperatur unter einem Stickstoffstrom auf 20°C ansteigen gelassen. Unter dem Mikroskop zeigt das Reaktionsgemisch dunkelviolette klettenartige polyacetylengebilde mit einem Durchmesser von ca. 0,1 mm. Die Suspension enthält 2,5 g polyacetylen pro Liter.

**Beispiel 3**

Zu 1 l einer nach Beispiel 1 hergestellten polyacetylensuspension fügt man unter Rühren bei 20°C eine Lösung von 4 g Iod in 100 ml Toluol und rührt 2 Stunden bei Raumtemperatur nach. Die ursprünglich violette Lösung entfärbt sich und man erhält eine dotierte klettenförmige polyacetylenteilchen enthaltende Suspension.

**Beispiel 4**

Analog Beispiel 3 wurde eine Suspension, die nach Beispiel 2 hergestellt wurde, mit einer Lösung von 2,5 g Iod in 100 ml Methylenchlorid dotiert.

**Beispiel 5**

Zu einer Lösung von 150 g Celluloseacetobutyrat (ca. 37 Gew.-% Butyryl, 14 Gew.-% Acetyl und 1,2 Gew.-% OH) in 850 g Essigsäurebutylester wurden 1,5 g Iod-dotiertes polyacetylen in 150 ml Methylenchlorid (hergestellt analog Beispiel 4) zugefügt. Unter Zufügen von Essigsäurebutylester wurde das Methylenchlorid bei vermindertem Druck entfernt. Die Celluloseacetobutyrathaltige dotierte polyacetylensuspension wurde mit Essigsäurebutylester auf 1 kg aufgefüllt. Beschichten von Glas (Fig. 3), Papier oder Kunststoffen liefert antistatische Überzüge mit einem Oberflächenwiderstand < $10^7$ Ω.

Analog wurden Lacksuspensionen mit 3 bzw. 5 % Iod-dotiertem polyacetylen - bezogen auf Celluloseacetobutyrat - hergestellt. Die damit beschichteten Flächen zeigten Oberflächenwiderstände von $10^6$ und $10^5$ Ω.

**Beispiel 6**

Eine polyacetylensuspension nach Beispiel 2 wurde mit Iod nach Beispiel 4 dotiert. Aus 0,5 g Iod-dotiertem Polyacetylen in 50 g Methylenchlorid und 50 g aromatischem Polycarbonat in 400 g Methylenchlorid wird eine Polycarbonatlösung hergestellt, in der Iod-dotiertes Polyacetylen in Klettenoder Faserform suspendiert ist. Mit diesem Reaktionsgemisch wurden die Oberflächen von Glas, papier und Kunststoffen durch

a) Lackieren mit einem Pinsel
b) Tauchlackierung
c) Besprühen

mit einer Lackschicht überzogen. Alle Oberflächen waren antistatisch und zeigten Oberflächenwiderstände <$10^9$ Ω. Geeignete Beschichtungsmassen lassen sich analog auch mit Reaktionsgemischen herstellen, deren Feststoffgehalt bis zu 90 % dotiertes polyacetylen ist. Sie liefern Überzüge mit Oberflächenwiderständen bis $10^1$Ω

**Beispiel 7**

Eine nach Beispiel 6 hergestellt 10 %ige polycarbonatlösung in Methylenchlorid, die 1 % Iod-dotiertes polyacetylen (bezogen auf Polycarbonat) enthält, wird mit einer Rakel auf einer Glasplatte zu Filmen von 500 µm Naßdicke ausgezogen. Nach Verdunsten des Lösungsmittels bleibt eine schwarze Folie von 50µm Stärke, die bei unveränderten mechanischen Eigenschaften einen Oberflächenwiderstand von $10^9$ Ω zeigt (Fig. 2). Die Folie wird durch Figur 2 näher erläutert (Vergrößerung 50:1).

**Beispiel 8**

Eine analog Beispiel 7 hergestellte Folie, die 3 Gew.-% Iod-dotiertes Polyacetylen enthält, zeigte einen Oberflächenwiderstand von $10^7$ Ω.

**Beispiel 9**

Eine analog Beispiel 7 hergestellte Folie, die 5 Gew.-% Iod-dotiertes polyacetylen enthält, zeigt einen Oberflächenwiderstand von $10^5$ Ω.

**Beispiel 10**

Eine nach Beispiel 2 hergestellte polyacetylensuspension wurde nach Beispiel 4 dotiert.

1 l einer Methylenchloridsuspension, die 10 g Iod-dotiertes polyacetylen enthält, wurde mit 1,5 1 Dimethylformamid versetzt. Im Vakuum wurden Methylenchlorid und Dimethylformamid so lange entfernt, bis eine Menge von 1 kg übrigblieb.

Zu 1 kg der so erhaltenen Suspension wurde eine Lösung von 990 g polyacrylnitril in 1856 g Dimethylformamid zugesetzt und nach Entgasen eine Spinnlösung erhalten. Die klettenförmigen dotierten polyacetylenteilchen werden zweckmäßig mit einem Ultraturrax zu faserförmigen Teilchen zerkleinert. Diese polyacrylnitril/polyacetylensuspension läßt sich zu schwarzen Fasern verspinnen, deren Gehalt an dotiertem polyacetylen ca. 1 Gew.-% beträgt. Die Fasern lassen sich auf die 4-fache Länge verstrecken und sind bei guten mechanischen Eigenschaften antistatisch (Fig. 4). Der Oberflächenwiderstand beträgt $10^8$ Ω.

## Patentansprüche

1. Verfahren zur Herstellung von Flächengebilden, einschließlich Fasern aus dotierte, kletten- oder faserförmige Polyacetylenteilchen enthaltenden Kunststofflösungen, dadurch gekennzeichnet, daß man das Lösungsmittel nach Formgebung unter geeigneten Bedingungen entfernt.

2. Verfahren nach Anspruch 1, worin die Kunststofflösung eine Lösung von Celluloseester, Polycarbonat, Polyvinylchlorid oder Polyacrylnitril in einem inerten organischen Lösungsmittel ist.

3. Verfahren nach Anspruch 1, worin die Kunststofflösung ein zusätzlich die Leitfähigkeit verbesserndes Additiv enthält.

4. Flächengebilde, einschließlich Fasern aus 0,01 bis 99 Gew.-% dotierte, kletten- oder faserförmige Polyacetylenteilchen enthaltenden Kunststoffen.

5. Flächengebilde aus Celluloseester, Polycarbonat, Polyvinylchlorid oder Polyacrylnitril, enthaltend 0,1 bis 20 Gew.-% dotiertes, kletten- oder faserförmiges Polyacatylen.

## Claims

1. Process for the production of sheet structures, including fibres, from plastics solutions containing doped, burr-shaped or fibrous polyacetylene particles, characterised in that, following shaping, the solvent is removed under suitable conditions.

2. Process according to Claim 1, wherein the plastics solution is a solution of cellulose ester, polycarbonate, polyvinyl chloride or polyacrylonitrile in an inert organic solvent.

3. process according to Claim 1, wherein the plastics solution contains an additive which additionally improves the conductivity.

4. Sheet structures, including fibres of plastics containing 0.01 to 99% by weight of doped, burr-shaped or fibrous polyacetylene particles.

5. Sheet structures of cellulose ester, polycarbonate, polyvinyl chloride or polyacrylonitrile, containing 0.1 to 20% by weight of doped, burr-shaped or fibrous polyacetylene.

## Revendications

1. Procédé de production de corps plans, y compris de fibres à partir de solutions de matiéres plastiques contenant des particules de polyacétyléne dopées, en forme de chardons ou de fibres, caractérisé en ce qu'on élimine le solvant aprés le formage dans des conditions appropriées.

2. Procédé suivant la revendication 1, dans lequel la solution de matière plastique est une solution d'un ester de cellulose, d'un polycarbonate, d'un chlorure de polyvinyle ou d'un polyacrylonitrile dans un solvant organique inerte.

3. Procédé suivant la revendication 1, dans lequel la solution de matière plastique contient un additif améliorant davantage la conductivité.

4. Des corps plans, y compris des fibres en matières plastiques contenant 0,07 à 99 % en poids de particules de polyacétylène dopées, en forme de chardons ou de fibres.

5. Corps plans en ester de cellulose, polycarbonate, chlorure de polyvinyle ou polyacrylonitrile, contenant 0,7 à 20 % en poids de polyacétylène dopé en forme de chardons ou de fibres.

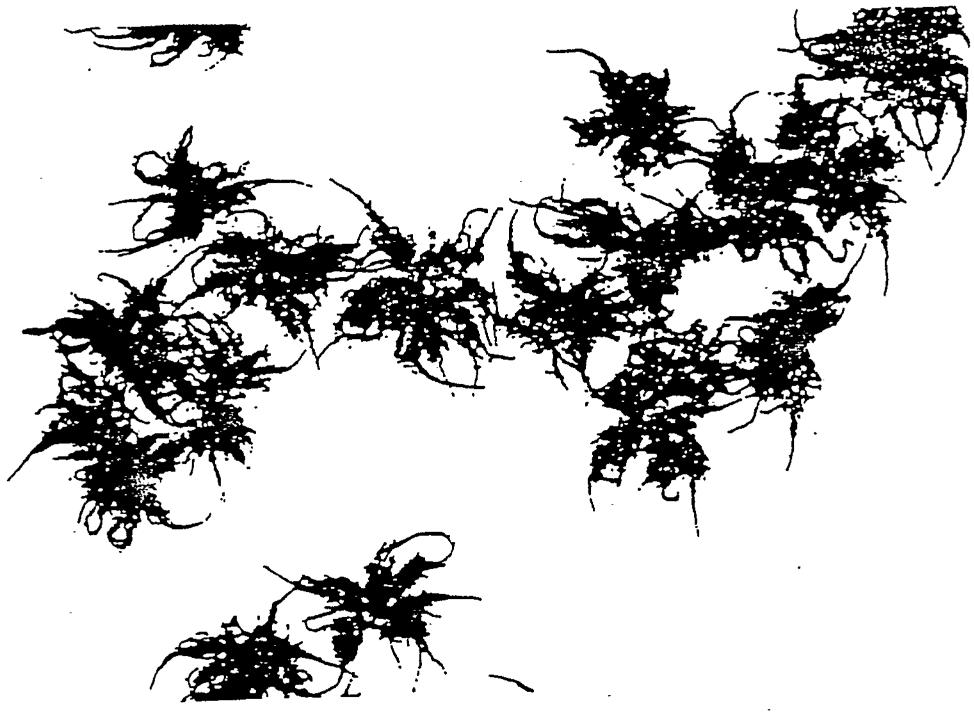

FIG. 1

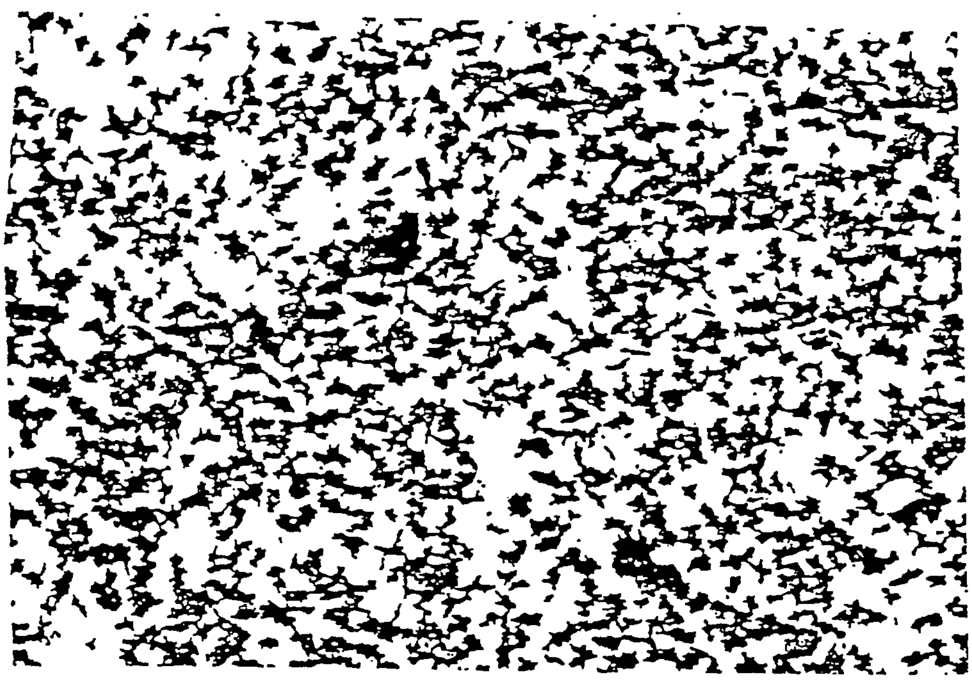

FIG. 2

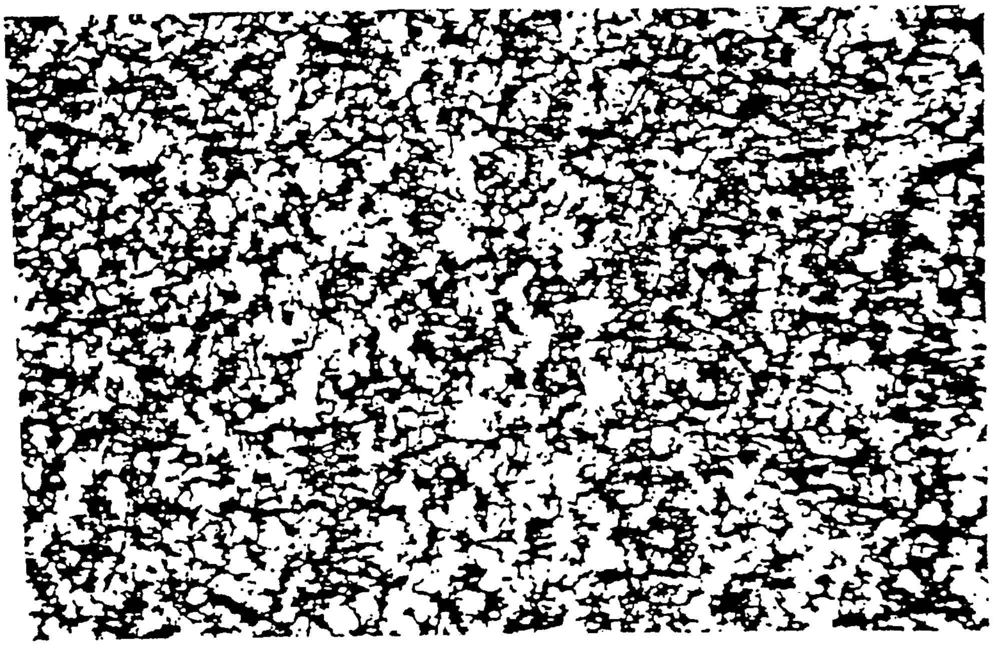

FIG. 3

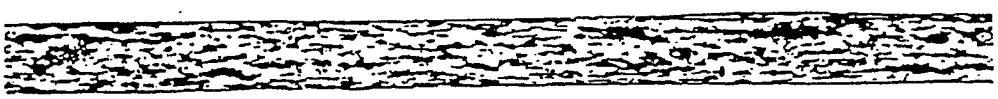

FIG. 4